(19) Europäisches Patentamt / European Patent Office / Office européen des brevets

(11) **EP 2 908 106 B1**

(12) **EUROPEAN PATENT SPECIFICATION**

(45) Date of publication and mention
of the grant of the patent:
**16.11.2016 Bulletin 2016/46**

(51) Int Cl.:
*G01J 1/02* (2006.01)    *F21V 23/04* (2006.01)
*G01J 1/42* (2006.01)

(21) Application number: **15425011.2**

(22) Date of filing: **11.02.2015**

(54) **LIGHT MEASUREMENT DEVICE FOR LIGHTING ELEMENT**

LICHTMESSGERÄT FÜR LEUCHTMITTEL

DISPOSITIF DE MESURE DE LUMIÈRE POUR MOYEN D'ÉCLAIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2014 IT VI20140041**

(43) Date of publication of application:
**19.08.2015 Bulletin 2015/34**

(73) Proprietor: **Beghelli S.p.A.**
**40053 Monteveglio (BO) (IT)**

(72) Inventor: **Beghelli, Gian Pietro**
**40053 Monteveglio (BO) (IT)**

(74) Representative: **Iannone, Carlo Luigi et al**
**Barzanò & Zanardo Roma S.p.A.**
**Via Piemonte 26**
**00187 Roma (IT)**

(56) References cited:
**US-A1- 2011 279 034    US-A1- 2012 043 889**

- **X JIANG ET AL: "Perpetual environmentally powered sensor networks", IPSN 2005. FOURTH INTERNATIONAL SYMPOSIUM ON INFORMATION PROCESSING IN SENSOR NETWORKS, 2005, 1 January 2005 (2005-01-01), pages 463-468, XP055145870, DOI: 10.1109/IPSN.2005.1440974 ISBN: 978-0-78-039201-4**

**Description**

The present invention generally relates to a light measuring device for luminaries; more particularly, the invention relates to a measuring device which includes a wireless light sensor, self-powered and equipped with a built-in radio transceiver, configured to control one or more lighting devices, such as fluorescent tubes, LEDs electronic tubes, waterproof lamps, etc.

The lighting fixtures installed in industrial, commercial and service areas have an automatic brightness adjustment which depends on the natural light widespread in the environment from windows and skylights and on the presence of people; said brightness adjustment is a very important function for energy saving.

The above mentioned control systems can be used thanks to the positioning of suitable light and presence sensors inside the lighting devices, which are provided in particular when said lighting devices are not set for said functions.

For example, in case of fluorescent tubes, LEDs allow the replacement of said fluorescent tubes with LED electronic tubes and the latter can be arranged for adjusting the brightness, even if the use of a light sensor in each single tube may not be convenient or optimal, especially given the kind of the lighting fixture in which the tubes are housed.

In fact, the placement of the brightness sensor does not always mechanically accords with the position of the tube inside the lighting fixtures and, more generally, the availability of a light sensor physically which is placed outside the electronic tubes or the electronic lighting fixtures (but functionally linked to them) would offer an important advantage in making automatic light adjustment systems, considering also the fact that if the sensor is not electrically connected with the light sources or with the lighting fixtures and moreover it has not batteries or other perishable power sources, said sensor requires no regular maintenance. A light sensor powered by a solar cell and coupled to the light source by a wireless transceiver is known from US 2011/0279034 A1.

Therefore, an object of the present invention is to provide a light measuring device for lighting fixtures, which is not physically connected with the electronic tubes or the electronic lighting fixtures to drive, but which is, at the same time, functionally linked to them.

Another object of the present invention is to provide a light measuring device for lighting fixtures, which is self-powered and which does not require periodic maintenance.

A further object of the present invention is to provide a light measuring device for lighting fixtures, which is able to communicate, via radio, to a plurality of lighting devices the light measurements and the information relating to the presence of people in environments.

These and other objects are achieved by a light measuring device for lighting fixtures, according to the appended claim 1; further technical features of the measuring device, which is the object of the invention, are disclosed in the dependent claims.

Advantageously, the light measuring device for lighting fixtures, according to the present invention, takes electrical power from the light emitted by the lighting fixtures to which it is coupled and allows to measure the light reflected from the floor and, optionally, to detect the presence of people in the environment where the lighting fixtures are installed.

Said measuring device can be provided with a pyroelectric sensor and integrates a photovoltaic cell for giving supply to the electronic circuits, by means of the light emitted by the driven lighting fixtures, as well as a wireless spread spectrum radio transceiver, which is able to communicate the light measurements and information related to the presence of people to the controlled lighting fixtures.

The device can also have a back-up battery for special uses, such as functioning with low brightness or when it is necessary to ensure functionality or at least part of functionality even with the light sources off. These and other objects and advantages will be more clear from the following description relating to preferred embodiments of the light measuring device for lighting fixtures, which is the object of the present invention, and from the enclosed drawings, in which:

-    figure 1 is a block diagram of a light measuring device for lighting fixtures, according to the invention;
-    figure 2 shows a front perspective view of the light measuring device for lighting fixtures, according to the present invention;

-    figure 3 shows a bottom perspective view of the light measuring device for lighting fixtures, according to the present invention;
-    figure 4 is a bottom perspective view of the light measuring device for lighting fixtures, in which some internal features are shown, according to the invention;
-    figure 5 is a top perspective view of the light measuring device for lighting fixtures, in which some internal features are shown, according to the invention;
-    figure 6 shows a preferred embodiment of the light measuring device, according to the present invention, in which the device is applied to a fluorescent tube;
-    figure 7 shows a preferred embodiment of the light measuring device, according to the present invention, in which the device is applied to a LEDs lighting tube;

- figure 8 shows a preferred embodiment of the light measuring device, according to the present invention, in which the device is applied to a "reglette" lamp lighting tube;
- figure 9 shows a preferred embodiment of the light measuring device, according to the invention, in which the device is applied to an open lighting lamp (with no external closure glass) and with anti-glare fins;
- figure 10 shows a preferred embodiment of the light measuring device, according to the invention, in which the device is applied to a sealed lighting lamp and is placed within the closure glass;
- figure 11 shows an electrical circuit of the light measuring device for lighting fixtures, according to the invention;
- figure 12 is a graph showing the trend of the ignition periodical cycle of the microprocessor, which is equipped with a built-in radio transceiver and which is employed in the light measuring device according to the invention.

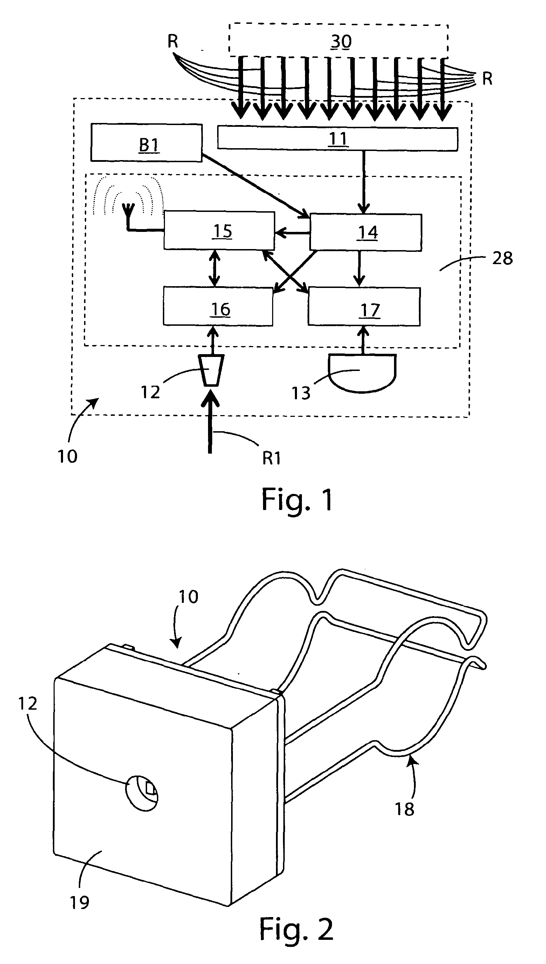

With reference to the above mentioned figure 1, the light measuring device 10 according to the present invention uses a photovoltaic cell 11 to take the electrical energy from the light radiation (R) emitted from the lighting fixture or apparatus, generally indicated with 30 in figure 1, in correspondence of which the measuring device 10 is placed.

The device 10 also incorporates a light sensor 12, with very low power consumption, which periodically samples the light radiation R1 reflected from the floor which is illuminated from the lighting fixture 30 coupled with the measuring device 10 and with the sensor 12.

A people presence sensor 13 (PIR, passive infrared sensor), with ultra-low power consumption, can be also integrated in the device 10, so as to detect the movements of people and/or objects in the area below the lighting fixture 30 which is coupled with the measuring device 10.

The available light energy, which is converted in electrical energy by means of the photovoltaic cell 11, is managed by the control circuit 14 ("power manager") and delivered appropriately to the different circuits (such as the light measuring circuit 16, the information control circuit 17 relating to the presence of people in the environment and the radio transceiver 15) placed inside the light measuring device 10, so as to also allow the periodic two-way transmissions relating to the information acquired from the measuring device 10 (such as the light measurements and the information on the presence of people), by means of a built-in wireless spread spectrum radio transceiver 15. The control circuit 14 also manages the operation of an optional battery B1, for example not rechargeable, which provides the energy required when there is no light.

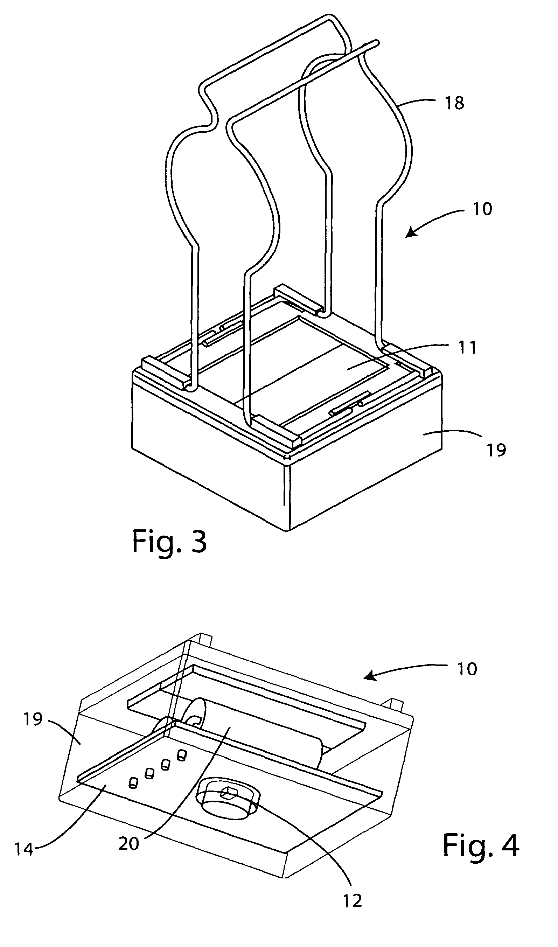

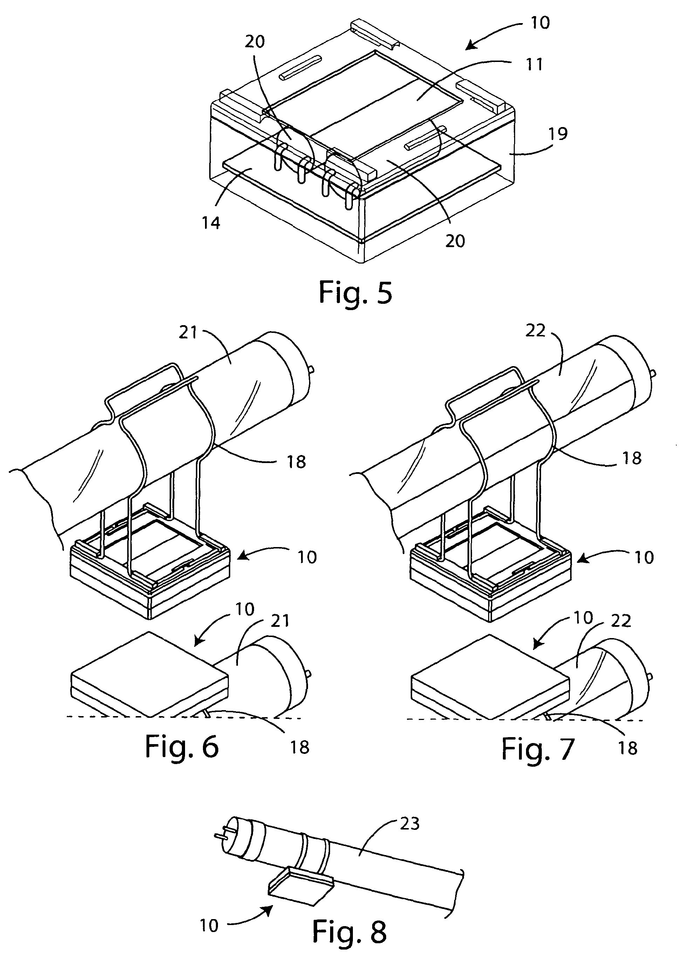

Figures 2, 3, 4 and 5 show some embodiments of the measuring device 10, which also includes an outer plastic housing 19, a spring 18 for fixing the measuring device 10 to the coupled lighting fixture 30 and the capacitors 20 which are able to store the electrical energy, while figures 6, 7, 8, 9 and 10 show different applications of the measuring device 10 coupled with some lighting fixtures 30, such as fluorescent tubes 21, LEDs electronic tubes 22, "reglette" lamp tubes 23, open lamps 24 (with no glass) with anti-glare fins, waterproof lamps 25 placed inside the cover glass 26.

The light measuring device for lighting fixtures, which is the object of the present invention, substantially operates as follows.

The lighting fixture 30 turns on its own light source and therefore provides the light energy, by means of the light radiation R, for supplying the light measuring device 10, which takes the above-mentioned light energy by means of the photovoltaic cell 11.

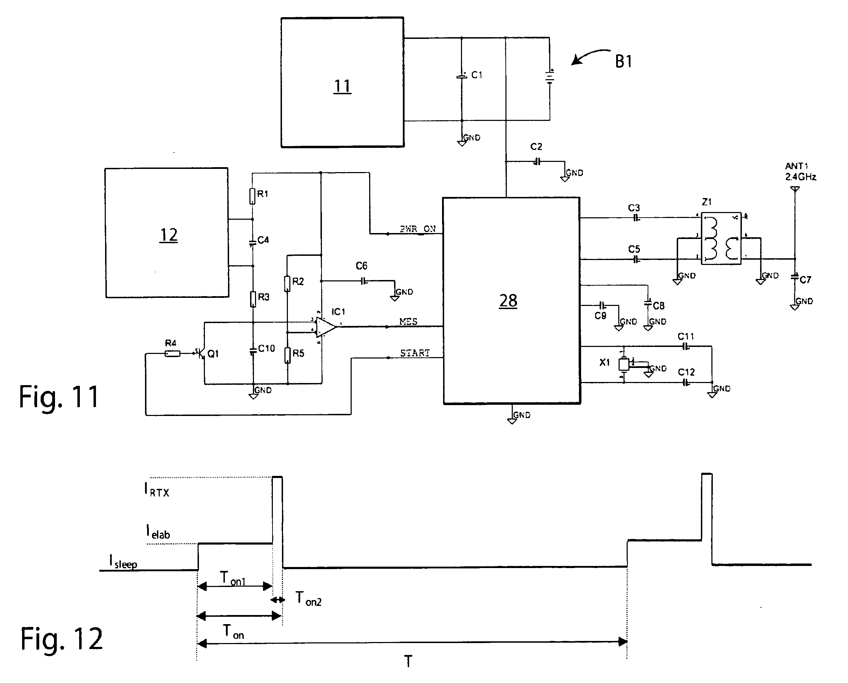

With particular reference to the enclosed figure 11, the photovoltaic cell 11 charges the energy storage capacitor C1 (which has enough capacity to provide the absorption peaks of the electronic circuits of the device 10) and, as soon as the voltage across C1 is enough to ensure the operation, the microprocessor 28, which has the built-in radio transceiver, turns on in a low power consumption mode and performs a light measurement by means of the ramp converter constituted by IC1, Q1 and the other auxiliary components of the light measurement circuit 16.

At the end of the conversion and as soon as the measurement is available, the microprocessor 28, which incorporates the management and control components 14 and the transceiver 15, turns on the built-in spread spectrum radio transceiver 15 and starts a transmission of the light measurement made to the lighting fixtures 30 to which it is coupled.

After the transmission, the microprocessor 28 turns off all the internal circuits and the converter IC1, Q1 (supplied from the microprocessor 28 via the output PWR_ON) and goes in a "sleep" mode, with the lowest energy absorption, during which only an internal clock with a very low consumption is activated for supplying a timer provided for the delayed restart of the device 10; for example, the cycle of a periodic reactivation of the microprocessor 28 can be 5 seconds, that is to say every 5 seconds the ultra low power internal timer turns on the microprocessor 28, so that within a few hundred of ms the microprocessor 28 is able to carry out the light measurement and to transmit the related data to the coupled lighting fixture 30 and thereafter the microprocessor 28 returns in a sleeping mode.

With particular reference to the enclosed figure 12, for example, if the periodic ignition cycle is T = 5 seconds and the processing on-time is Ton ~ 300-400 ms, the average consumption is less than 10% of the absorption during the processing period.

Two time intervals, respectively constituted by Ton1 (reading and processing of the measurement) and Ton2 (transmission of information), are comprised within the period Ton and the current consumption in said two time intervals are respectively Ielab and IRTX.

The average current consumption is equal to

$$Imed = Isleep*(T-Ton)/T + Ielab*Ton1/T + IRTX*Ton2/T$$

and then if

Isleep = 5$\mu$A, Ielab = 100$\mu$A, IRTX = 10mA, Ton1 = 300ms, Ton2 = 5ms and T = 5s,

Imed $\sim$ 21$\mu$A.

The above value is compatible with the average current that can provide a photovoltaic cell having a size of about 25x10 mm placed a few centimeters away from a fluorescent or LED lighting tube.

The power supply of the circuit is ensured by the capacitor C1 which provides the peak current absorbed during the time intervals Ton1 and Ton2; for example, a 220$\mu$F capacitor would result in a maximum voltage drop of less than 0.4V during the period Ton, thus ensuring continuity of operation and said capacitor would take about 30 seconds to charge up to the rated voltage of 3V with a photovoltaic cell made up of five elements in series (5 * 0.6V = 3V) delivering 20$\mu$A, starting from an initial condition of complete darkness.

The measuring device 10 operates in about ½ minute and sustains itself by performing a measurement of light every 5 seconds and sending said measurement to the lamps of the coupled lighting fixtures 30.

When the sensor 12 is controlled to operate even when the lighting fixtures 30 are turned off, the optional battery B1 is used, which provides power to the electrical circuits (for example, a CR2032 battery could ensure, in the total absence of light, an operating life of several years).

The wireless light measuring device 10 is coupled to one or more lighting fixtures 30, which also have a spread spectrum radio transceiver and which are able to vary the intensity of the light source (dimmable lighting fixtures).

All the above mentioned lighting fixtures 30 that are coupled to the wireless light measuring device 10 periodically (typically every T=5 sec) receive the brightness value R1 (coming from the light radiation) which is reflected from the floor and this value is used by the lighting fixture 30 to have the light emitted according to an auto-dimming algorithm.

The adjustment is made by keeping time-constant the brightness of the light radiation R1 reflected from the floor, taking into account that the reflected light R1 is the sum of the light projected on the floor from the light source of the lighting fixture 30 and the natural light of the environment, coming from for example from windows and skylights.

The measuring device 10, immediately after the first installation, operates on the lighting fixtures 30 so as to carry out an automatic procedure of self-calibration of the light sensor 12, which allows the sensor 12 and the coupled lighting fixtures 30 to adapt the lighting features to the lighting context.

The wireless measuring device 10 therefore measures the light reflected from the floor and from the lighted objects and, on the basis of said measurement, performs an adjustment of the light source so that:

$$Lreflected = Lfixture + Lenvironment.$$

It is clear that keeping constant the above sum is equivalent to automatically drop the light emitted from the lighting fixtures 30 when the environment light increases, as well as it is clear that the reflected light depends on many physical and geometrical factors, such as the reflection coefficient of the lighted surface, its geometrical conformation, the distance from the lighting fixture, the presence of objects having not homogeneous features.

The measuring device 10 according to the invention, thanks to a known self-adaptive adjustment and calibrating method (which is disclosed for example in document ITVI2012A000298), after a few hours of installation has already measured the reflection conditions in the environment in which it is installed and is already able to estimate the proper mix of light emitted from the lighting fixtures and of environment light; said estimation becomes more and more accurate during the time and automatically adapts to changes in the environment; furthermore, the lighting fixtures 30 coupled to the light sensor 12 and to the measuring device 10 are also adjusted, through a suitable protocol, so that all of said lighting fixtures 30, at the first installation and as soon as they are used in combination with the measuring device 10, have the maximum power and share the information of brightness received from the measuring device 10 (a first set-point value) and then, successively and periodically (for example, once every hour), have the maximum power to evaluate a new value of brightness until a calibrating condition is reached when the light reflected is minimal (condition according to which there is no natural light).

During the time periods elapsing between successive recalibration time instants, the lighting fixtures 30, for every measure received by the wireless measuring device 10, synchronously change their brightness to maintain constant the measured light at the set-point value.

If the next measurement is lower than the set-point value all of said lighting fixtures 30 increase the brightness by one step, and, conversely, if the next measurement is higher than the set-point all of said lighting fixtures 30 decreases the brightness by one step up to an equilibrium condition at a minimum value of brightness.

Therefore, all lighting fixtures 30 which are coupled with the same wireless sensor 12 and with the same measuring device 10 maintain the same emitted brightness, without differences and with a good lighting effect of the area in which they are placed. This avoids differences in light intensity emitted by nearby lighting fixtures.

When the lighting fixtures coupled to the wireless sensor 12 and to the measuring device 10 are constituted by LEDs electronic tubes equipped with spread spectrum radio transceivers and with dimmable ballasts, each wireless sensor 12 can be combined, for example, to a pair of LEDs tubes or to a single LEDs tube or to 4 LEDs electronic tubes contained in a 4X ceiling.

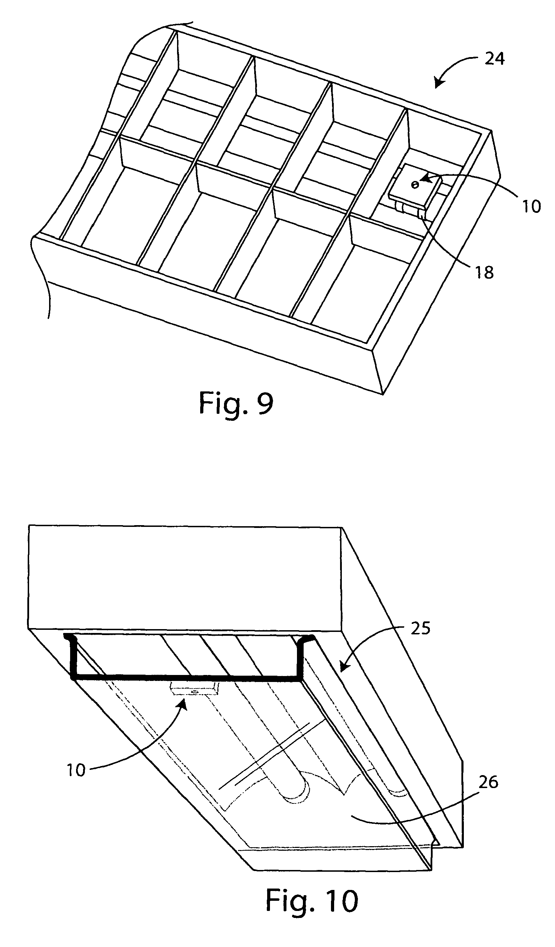

In all cases, thanks to the wireless light sensor 12, lighting fixtures with an auto-dimmer function are provided, in which the LEDs tubes do not require light sensors placed within the tubes, but the light measurement is carried out by an element which is completely disconnected from the lighting fixture 30 and which can be easily latched to the tubes (as shown in figures 8 and 9) or fixed to the glass of the waterproof lighting apparatus (as shown in figure 10). It is clear the advantage given by the fact that the installer is able to treat the LED tubes as conventional fluorescent tubes (the tubes do not have protuberances or notches for housing the light sensors); moreover, the light measurement is provided by means of an element which is easy to apply to the lighting fixture 30, without any difficulty of assembling or connecting the tubes; the wireless measuring device 10 has also the advantage of not requiring any type of maintenance, being completely independent.

As already said, the wireless lighting measuring device 10 integrates the radio transceiver 15 which transmits the light measurements of the coupled tubes or lighting fixtures 30; said radio transceiver 15 is for example of the spread spectrum type and operates in the 2.400 ÷ 2.483 GHz band.

At the first installation of the measuring device 10, an automatic pairing of the lighting fixtures 30 to the sensor 12, according to the principle of physical proximity, is performed.

In fact, the radio transceiver 15 which is incorporated in the measuring device 10 is suitably weakened in order to have a limited range (a few tens of centimeters) and, when turned on, the radio transceiver 15 sends a generic request to the lighting fixtures 30; among the responses received by the lighting fixtures 30, the measuring device 10 validates for example the responses marked with the strongest radio signal discarding those below a certain threshold level and the validated answers are again communicated to the paired lighting fixtures 30 that were sent said marked responses.

The measuring device 10 may also be equipped with a button, not shown in the enclosed figures, which is provided for re-initializing the pairing process, so that, at each press of the button, the measuring device 10 restart the self-pairing procedure; this function may be needed in case of replacement of one or more of the coupled lighting fixtures 30.

According to an alternative embodiment of the measuring device 10 according to the invention, said device 10 has also a pyroelectric sensor 13 or, alternatively, can include only said pyroelectric sensor 13 without the use of the ambient light sensor 12.

The operation is however similar to that described, since, even in this case, the photovoltaic cell 11, together with the optional battery B1, gives the electrical supply to the electronic control circuit 14 (which is normally in a sleeping state) and maintains the power supply only to the pyroelectric sensor 13 (with a standby power consumption of the order of a few microampere).

As soon as the pyroelectric sensor 13 detects a movement, the pyroelectric sensor 13 turns on the microprocessor 28 by means of an interrupt input and the microprocessor 28, after having detected the event, transmits the related information via radio to the coupled lighting fixtures 30 and immediately goes in a sleeping state before turning on again (not before the time interval T or later, during a forthcoming motion event); therefore, the energy consumption is again minimized and limited to the capacity of the photovoltaic cell 11.

This feature also allows to have automatic lighting systems which are very effective in saving energy and the lighting fixtures 30 (fluorescent or LEDs tubes) which are coupled to the measuring device 10 can be programmed to normally maintain the minimum brightness and then to increase their brightness when a motion is detected below the fixture.

Furthermore, the measuring device 10, being able to communicate the information of a detected movement, can "trigger" the event by means of a radio transmission following the movement detection; it is thus possible carry out, in particular, lighting fixtures with LED tubes, each of which can integrate its own movement sensor (which is coupled, via radio, to the tubes and which is powered by the light emitted from said tubes). Moreover, the lighting fixtures are independent between them and can constitute automatic lighting systems with high energy saving.

Finally, the wireless measuring device 10, when coupled with LEDs electronic tubes with radio transceiver, is able to transform a lighting fixture which is originally equipped with fluorescent tubes and a ferromagnetic ballast in a LED electronic lighting fixture having an emitted light auto-adjustment function and an automatic adjustment of the light as a function of the presence of people under the fixture (the latter function is possible when the wireless sensor is also equipped with a pyroelectric sensor 13). From the above description the technical features of the light measuring device for lighting fixtures, which is the object of the present invention, are clear as well as the related advantages.

In particular, it was indeed found as the wireless measuring device of the present invention allows a complete transformation of the lighting fixture, only by replacing the fluorescent tubes and by adding a simple small device.

It is finally clear that many other variations may be made to the light measuring device of the invention, without departing from the principles of novelty inherent in the inventive idea as claimed in the appended claims of the invention, as it is clear that in the practical implementation of the invention, the materials, shapes and dimensions of the technical features may be any according to requirements and they can be replaced with other technically equivalent.

**Claims**

1. Light measurement device (10) configured to control tubular lamps (21, 22, 23), comprising a photovoltaic cell (11) which draws electrical energy from light radiation (R) emitted by said tubular lamps (21, 22, 23), which are coupled with said measurement device (10) by means of at least one storage capacitor (20, C1), a light sensor (12), which periodically samples light radiation (R1) reflected from at least one surface illuminated by said coupled tubular lamps (21, 22, 23), and optionally a pyroelectric sensor (13) which detects movements occurring below said tubular lamps (21, 22, 23), said electric energy being managed by a control circuit (14) and supplied to a light measuring circuit (16) and optionally to a movement detecting circuit (17), which detect, process and transmit light and optionally movement measurements, including the measurement of said reflected light radiation (R1), to said tubular lamps (21, 22, 23) by means of a radio transceiver (15), which is preferably a "wireless spread spectrum" radio transceiver, the radio transceiver being incorporated in the measurement device (10), each of said tubular lamps (21, 22, 23) being equipped with a radio transceiver, which is preferably a "wireless spread spectrum" radio transceiver, and being able to vary the brightness of the light source of the tubular lamp wherein said measurement device (10) has at least one spring (18), able to secure the device (10) to a tubular lamp (21, 22, 23) to which the measurement device (10) is coupled.

2. Measurement device (10) according to claim 1, **characterized in that** a microprocessor (28), which includes said control circuit (14) and said radio transceiver (15), performs prefixed periodic cycles for switching on and off said tubular lamp (21, 22, 23), so as to perform a light measurement at predetermined time intervals.

3. Measurement device (10) according to at least one of the preceding claims, **characterized in that** said device (10) includes a battery (B1), which provides power supply to said control and measuring circuits (14, 16) when said light sensor (12) is turned on and said tubular lamps (21, 22, 23) are off.

4. Measurement device (10) according to at least one of the preceding claims, **characterized in that** said control circuit (14) keeps at a prefixed value the brightness of said light reflected radiation (R1), said brightness of the light reflected radiation (R1) being equal to the sum of brightness projected on said surface from said tubular lamps (21, 22, 23) and natural brightness of the environment where said measurement device (10) is installed.

5. Measurement device (10) according to at least one of the preceding claims, **characterized in that** said device (10) firstly implements a automatic self-calibrating procedure of said light sensor (12), while said tubular lamps (21, 22, 23), which are coupled with the measurement device (10) and with said light sensor (12), for each measurement performed and received from said measurement circuit (16), change the brightness synchronously, in order to keep a constant overall brightness measured at a prefixed set-point value.

6. Measurement device (10) according to at least one of the preceding claims, **characterized in that** said radio transceiver (15) which is incorporated in the measurement device (10) has a limited range, so as to validate the strongest radio signals received by the radio transceivers which are placed in the coupled tubular lamps (21, 22, 23), thus performing a pairing procedure with said lighting apparatus (30).

7. Measurement device (10) according to claim 6, **characterized in that** said pairing procedure is manually re-started by an external user.

**Patentansprüche**

1. Lichtmessgerät (10), konfiguriert zum Steuern von Röhrenlampen (21, 22, 23), umfassend eine fotovoltaische Zelle (11), die elektrische Energie aus von den genannten Röhrenlampen (21, 22, 23) emittierter Lichtstrahlung (R) zieht, die über wenigstens einen Speicherkondensator (20, C1), einen Lichtsensor (12), der periodisch Lichtstrahlung (R1) abtastet, die von wenigstens einer von den genannten gekoppelten Röhrenlampen (21, 22, 23) beleuchteten Oberfläche reflektiert wird, und optional einen pyroelektrischen Sensor (13) mit dem genannten Messgerät (10) gekoppelt sind, der unterhalb der genannten Röhrenlampen (21, 22, 23) auftretende Bewegungen erkennt, wobei die genannte elektrische Energie von einer Steuerschaltung (14) verwaltet und einer Lichtmessschaltung (16) und optional einer Bewegungserkennungsschaltung (17) zugeführt wird, die Licht- und optional Bewegungsmessungen, einschließlich der Messung der genannten reflektierten Lichtstrahlung (R1), erkennen, verarbeiten und zu den genannten Röhrenlampen (21, 22, 23) mittels eines Funksenders/-empfängers (15) übertragen, der vorzugsweise ein "Drahtlos-Spreizspektrum"-Funksender/-empfänger ist, wobei der Funksender/-empfänger in das Messgerät (10) integriert ist, wobei jede der genannten Röhrenlampen (21, 22, 23) mit einem Funksender/-empfänger ausgestattet ist, der vorzugsweise ein "Drahtlos-Spreizspektrum"-Funksender/-empfänger ist, und die Helligkeit der Lichtquelle der Röhrenlampe variieren kann, wobei das genannte Messgerät (10) wenigstens eine Feder (18) hat, die das Gerät (10) an einer Röhrenlampe (21, 22, 23) befestigen kann, mit der das Messgerät (10) gekoppelt ist.

2. Messgerät (10) nach Anspruch 1, **dadurch gekennzeichnet, dass** ein Mikroprozessor (28), der die genannte Steuerschaltung (14) und den genannten Funksender/-empfänger (15) beinhaltet, zuvor festgelegte periodische Zyklen zum Ein- und Ausschalten der genannten Röhrenlampe (21, 22, 23) ausführt, um in vorbestimmten Zeitintervallen eine Lichtmessung durchzuführen.

3. Messgerät (10) nach wenigstens einem der vorherigen Ansprüche, **dadurch gekennzeichnet, dass** das genannte Gerät (10) eine Batterie (B1) aufweist, die die genannten Steuer- und Messschaltungen (14, 16) mit Strom versorgt, wenn der genannte Lichtsensor (12) eingeschaltet ist und die genannten Röhrenlampen (21, 22, 23) ausgeschaltet sind.

4. Messgerät (10) nach wenigstens einem der vorherigen Ansprüche, **dadurch gekennzeichnet, dass** die genannte Steuerschaltung (14) die Helligkeit der genannten lichtreflektierten Strahlung (R1) auf einem zuvor festgelegten Wert hält, wobei die genannte Helligkeit der lichtreflektierten Strahlung (R1) gleich der Summe der von den genannten Röhrenlampen (21, 22, 23) auf die genannte Oberfläche projizierten Helligkeit und der natürlichen Helligkeit der Umgebung ist, in der das genannte Messgerät (10) installiert ist.

5. Messgerät (10) nach wenigstens einem der vorherigen Ansprüche, **dadurch gekennzeichnet, dass** das genannte Gerät (10) zunächst ein automatisches Selbstkalibrationsverfahren des genannten Lichtsensors (12) implementiert, während die mit dem Messgerät (10) und mit dem genannten Lichtsensor (12) gekoppelten genannten Röhrenlampen (21, 22, 23) für jede von der genannten Messschaltung (16) ausgeführte und empfangene Messung die Helligkeit synchron ändern, um eine gemessene konstante Gesamthelligkeit auf einem zuvor festgelegten Sollwert zu halten.

6. Messgerät (10) nach wenigstens einem der vorherigen Ansprüche, **dadurch gekennzeichnet, dass** der in das Messgerät (10) integrierte genannte Funksender/-empfänger (15) einen begrenzten Bereich hat, um die stärksten Funksignale zu validieren, die von den in den gekoppelten Röhrenlampen (21, 22, 23) platzierten Funksendern/-empfängern empfangen werden, um so einen Paarungsvorgang mit der genannten Beleuchtungsvorrichtung (30) durchzuführen.

7. Messgerät (10) nach Anspruch 6, **dadurch gekennzeichnet, dass** der Paarungsvorgang von einem externen Benutzer manuell neu gestartet wird.

## Revendications

1. Dispositif de mesure de lumière (10) configuré pour commander des lampes tubulaires (21, 22, 23), comprenant une cellule photovoltaïque (11) qui tire de l'énergie électrique à partir d'un rayonnement lumineux (R) émis par lesdites lampes tubulaires (21, 22, 23), qui sont couplées audit dispositif de mesure (10) au moyen d'au moins un condensateur de stockage (20, C1), un capteur de lumière (12), qui échantillonne périodiquement un rayonnement lumineux (R1) réfléchi à partir d'au moins une surface illuminée par lesdites lampes tubulaires couplées (21, 22, 23), et de manière facultative un capteur pyroélectrique (13) qui détecte des mouvements se produisant au-dessous desdites lampes tubulaires (21, 22, 23), ladite énergie électrique étant gérée par un circuit de commande (14), et fournie à un circuit de mesure de lumière (16) et de manière facultative à un circuit de détection de mouvement (17), qui détectent, traitent et émettent une lumière et de manière facultative des mesures de mouvement, incluant la mesure dudit rayonnement lumineux réfléchi (R1), auxdites lampes tubulaires (21, 22, 23) au moyen d'un émetteur-récepteur radio (15), qui est de préférence un émetteur-récepteur radio « sans fil à spectre étalé », l'émetteur-récepteur radio étant incorporé dans le dispositif de mesure (10), chacune desdites lampes tubulaires (21, 22, 23) étant équipée d'un émetteur-récepteur radio, qui est de préférence un émetteur-récepteur radio « sans fil à spectre étalé », et étant capable de varier la luminosité de la source de lumière de la lampe tubulaire, dans lequel ledit dispositif de mesure (10) a au moins un ressort (18), susceptible de fixer le dispositif (10) à une lampe tubulaire (21, 22, 23) à laquelle le dispositif de mesure (10) est couplé.

2. Dispositif de mesure (10) selon la revendication 1, **caractérisé en ce qu'**un microprocesseur (28), qui inclut ledit circuit de commande (14) et ledit émetteur-récepteur radio (15), effectue des cycles périodiques prédéterminés pour l'allumage et l'extinction de ladite lampe tubulaire (21, 22, 23), afin d'effectuer une mesure de lumière à des intervalles de temps prédéterminés.

3. Dispositif de mesure (10) selon au moins une des revendications précédentes, **caractérisé en ce que** ledit dispositif (10) inclut une batterie (B1), qui fournit l'alimentation en énergie auxdits circuits de commande et de mesure (14, 16) lorsque ledit capteur de lumière (12) est mis en fonction et que lesdites lampes tubulaires (21, 22, 23) sont éteintes.

4. Dispositif de mesure (10) selon au moins une des revendications précédentes, **caractérisé en ce que** ledit circuit de commande (14) maintient à une valeur préfixée la luminosité dudit rayonnement lumineux réfléchi (R1), ladite luminosité du rayonnement lumineux réfléchi (R1) étant égale à la somme de la luminosité projetée sur ladite surface à partir desdites lampes tubulaires (21, 22, 23) et de la luminosité naturelle de l'environnement où ledit dispositif de mesure (10) est installé.

5. Dispositif de mesure (10) selon au moins une des revendications précédentes, **caractérisé en ce que** ledit dispositif (10) met premièrement en oeuvre une procédure d'auto-étalonnage automatique dudit capteur de lumière (12), tandis que lesdites lampes tubulaires (21, 22, 23), qui sont couplées au dispositif de mesure (10) et audit capteur de lumière (12), pour chaque mesure effectuée et reçue en provenance dudit circuit de mesure (16), changent la luminosité de façon synchrone, afin de maintenir une luminosité globale constante mesurée à une valeur de point de consigne prédéterminée.

6. Dispositif de mesure (10) selon au moins une des revendications précédentes, **caractérisé en ce que** ledit émetteur-récepteur radio (15) qui est incorporé dans le dispositif de mesure (10) a une portée limitée, afin de valider les signaux radio reçus les plus forts par les émetteurs-récepteurs radio qui sont placés dans les lampes tubulaires couplées (21, 22, 23), effectuant ainsi une procédure d'appariement avec ledit appareil d'éclairage (30).

7. Dispositif de mesure (10) selon la revendication 6, **caractérisé en ce que** ladite procédure d'appariement est reprise manuellement par un utilisateur externe.

Fig. 1

Fig. 2

Fig. 3

Fig. 4

Fig. 5

Fig. 6

Fig. 7

Fig. 8

Fig. 9

Fig. 10

Fig. 11

Fig. 12

EP 2 908 106 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110279034 A1

- IT ITVI2012000298 A